# EUROPEAN PATENT SPECIFICATION

(11) **EP 4 103 990 B1**
(45) Date of publication and mention of the grant of the patent: **13.05.2026**
(21) Application number: 21704270.4
(22) Date of filing: 09.02.2021
(51) Int. Cl.: G02B 6/44

(54) **TELECOMMUNICATIONS ENCLOSURE**
TELEKOMMUNIKATIONSGEHÄUSE
ENCEINTE DE TÉLÉCOMMUNICATIONS

(30) Priority: 10.02.2020 US 202062972526 P
(43) Date of publication of application: 21.12.2022
(73) Proprietor: CommScope Connectivity Belgium BV, 3010 Kessel-Lo (BE)
(72) Inventor: ZAVREL, Jiri, Hickory, North Carolina 28602 (US); VAN MEEUWEN, Bart, Hickory, North Carolina 28602 (US); VASTMANS, Kristof, Hickory, North Carolina 28602 (US); ROELANDTS, Nico, Hickory, North Carolina 28602 (US)
(74) Representative: Murgitroyd & Company
(86) International application number: PCT/EP2021/053061
(87) International publication number: WO 2021/160601

(56) References cited:
- EP-A1- 2 439 570
- EP-A1- 3 696 585
- WO-A1-2009/031172
- WO-A1-2019/091415
- US-A1- 2016 033 731

## Description

### CROSS-REFERENCE TO RELATED APPLICATION

This application claims the benefit of U.S. Patent Application Serial No. 62/972,526, filed on February 10, 2020.

### BACKGROUND

Telecommunications systems typically receive subscriber or distribution cables, splice these fiber optic cables to a pigtail cable, and connect the pigtail cable to fiber optic equipment. To organize the fiber optic cables and equipment, fiber distribution cabinets are used. Fiber distribution cabinets permit connections to various fiber optic equipment using patch cords, and provide splice areas for splicing incoming cables containing one or more optical fibers.

There is a continuous need to maintain a high-density fiber distribution cabinets. There are further needs to improve accessibility to the patch cords and splice areas, enhance fiber optic cable management, and avoid excessive bending and stresses on the various fiber optic cables. WO2019/091415A1 discloses related art.

### SUMMARY

This disclosure relates to the organization of optical fibers within a telecommunications enclosure. More specifically, the telecommunication enclosure includes a frame that allows access to one or more termination panels on a front plane and access to one or more splice areas on a lateral side plane to allow multiple workers to work on the enclosure simultaneously. The invention is defined in claim 1, further embodiments are defined in the dependent claims.

A variety of additional aspects will be set forth in the description that follows. The aspects can relate to individual features and to combinations of features. It is to be understood that both the forgoing general description and the following detailed description are exemplary and explanatory only and are not restrictive of the scope of the invention, which is defined by the appended claims.

### DESCRIPTION OF THE DRAWINGS

The accompanying drawings, which are incorporated herein and constitute a part of the description, illustrate several exemplary aspects of the present disclosure.
FIG. 1 is an isometric view of a telecommunications system that includes a frame for mounting telecommunications equipment.
FIG. 2 is a top view of the frame in accordance with one embodiment.
FIG. 3 is a top view of the frame in accordance with another embodiment.
FIG. 4 is a top view of the frame in accordance with another embodiment.
FIG. 5 is a top view of the frame in accordance with another embodiment.
FIG. 6 is an isometric view of another telecommunications system that includes a frame for mounting telecommunications equipment.
FIG. 7 is an isometric view of the telecommunications system of FIG. 6 with a first splice area shown in an access position.
FIG. 8 is an isometric view of the telecommunications system of FIG. 6 with a second splice area shown in an access position.
FIG. 9 is an exploded isometric view of the telecommunications system of FIG. 6.
FIG. 10 is an isometric view of the telecommunications system of FIG. 6 with the first and second splice areas each shown in a storage position, and with first and second termination panels each shown in an access position.
FIG. 11 is a front view of the telecommunications system of FIG. 6 with the first and second termination panels each shown in a storage position.

### DETAILED DESCRIPTION

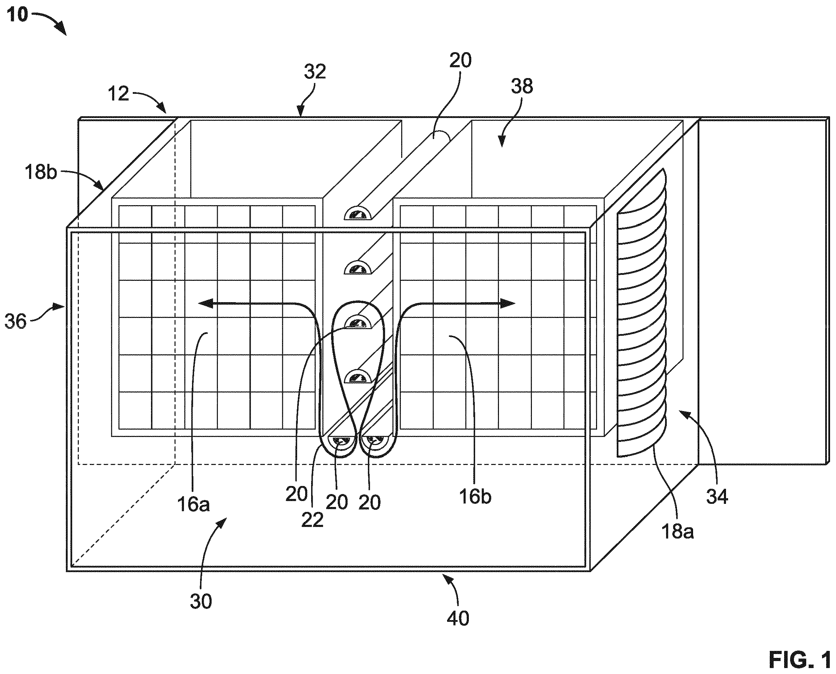

FIG. 1 is an isometric view of a telecommunications system 10. In some examples, the telecommunications system 10 is a fiber distribution cabinet, enclosure, rack, and the like.

The telecommunications system 10 includes a frame 12 that supports one or more termination panels (such as first and second termination panels 16a, 16b) and one or more splice areas (such as first and second splice areas 18a, 18b). A plurality of cable management devices 20 are mounted to the frame 12 to manage a plurality of patch cords 22 that run between a first termination panel 16a and a second termination panel 16b. The cable management devices 20 limit cable bend radius and manage cable slack. In some examples, the cable management devices 20 are cable radius limiters, spools, and the like. The patch cords 22 can be used to cross-connect between various termination locations on the termination panels.

As shown in FIG. 1, the frame 12 defines a plurality of planes. For examples, the frame 12 defines six quadrilateral planes and has a substantially rectangular prism shape. The frame 12 defines at least a front plane 30, a rear plane 32, a right side plane 34, a left side plane 36, a top plane 38, and a bottom plane 40. The right and left side plans 34, 36 are each a lateral side plane.

The first and second termination panels 16a, 16b are accessible from the front plane 30 of the frame 12 while at least one splice area 18 is accessible from the right side plane 34 or left side plane 36 of the frame 12. Advantageously, a first worker can access the first and second termination panels 16a, 16b on the front plane 30 of the frame 12 while a second worker accesses a splice area 18 from the right side plane 34 or the left side planes 36 of the frame 12 such that more than one worker may work on the telecommunications system 10 at the same time.

In the example illustrated in FIG. 1, a first splice area 18a is accessible from the right side plane 34 of the frame 12 and a second splice area 18b is accessible from the left side plane 36 of the frame 12. Thus, a first worker can access the first and second termination panels 16a, 16b on the front plane 30 of the frame 12 while a second worker accesses the first splice area 18a from the right side plane 34 of the frame 12 and a third worker accesses the second splice area 18b from the left side plane 36 of the frame 12. Advantageously, three workers can simultaneously work on the telecommunications system 10 with little or no interference between them.

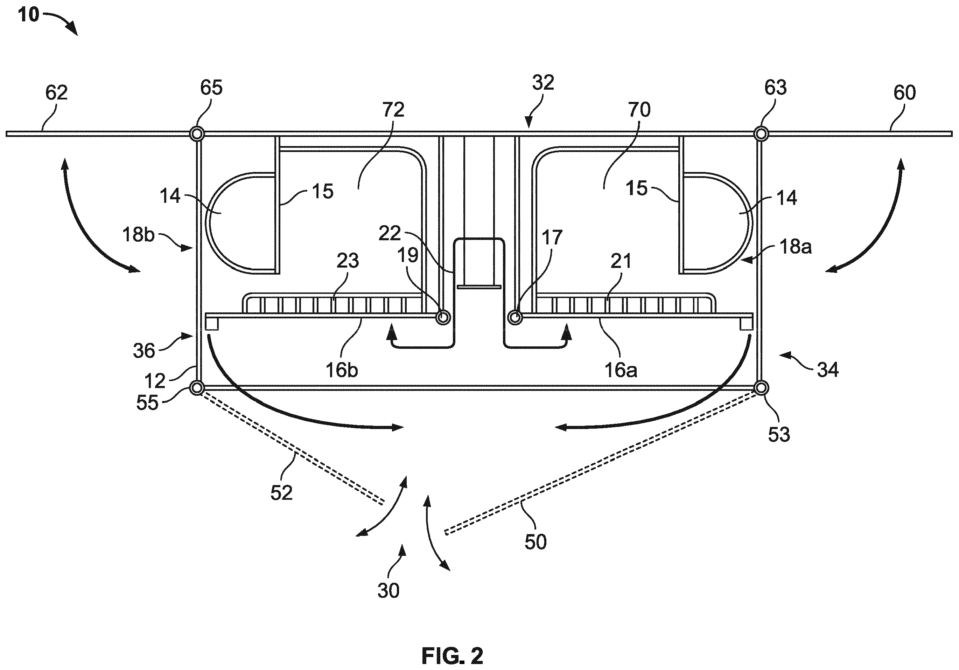

FIG. 2 is a top view of the frame 12 in accordance with a first embodiment. Referring now to FIG. 2, the frame 12 includes a plurality of doors 50, 52, 60, 62 to provide access and block access to the various pieces of equipment inside the frame 12 including the first and second termination panels 16a, 16b and first and second splice areas 18a, 18b.

The first and second front doors 50, 52 are pivotally attached to the frame 12 about hinges 53, 55, respectively. The first and second front doors 50, 52 can each swing from a closed position to an opened position to provide access to the first and second termination panels 16a, 16b and can each swing from the opened position to the closed position to block access to the first and second termination panels 16a, 16b, and thereby protect these components.

The first and second front doors 50, 52 swing about their respective hinges 53, 55 in opposite directions to open and close access to the first and second termination panels 16a, 16b, respectively. The first front door 50 swings about hinge 53 from the closed position to the opened position (e.g., in the counterclockwise direction) to provide access to the first termination panel 16a while the second front door 52 swings about hinge 55 from the closed position to the opened position (e.g., in the clockwise direction) to provide access to the second termination panel 16b. Also, the first front door 50 swings about hinge 53 from the opened position to the closed position (e.g., in the clockwise direction) to block access to the first termination panel 16a while the second front door 52 swings about hinge 55 from the opened position to the closed position (i.e., the counterclockwise direction) to block access to the second termination panel 16b.

As further shown in the example illustrated in FIG. 2, the first termination panel 16a is pivotally attached to the frame 12 about hinge 17 such that the first termination panel 16a can swing about the hinge 17 from a storage position to an access position to provide access to a plurality of cable termination locations 21 on the first termination panel 16a. Thus, the cable termination locations 21 are positioned on an interior surface of the first termination panel 16a that can be accessed by a worker by swinging the first termination panel 16a about the hinge 17.

Similarly, the second termination panel 16b is pivotally attached to the frame 12 about hinge 19 such that the second termination panel 16b can swing about the hinge 19 from a storage position to an access position to provide access to a plurality of cable termination locations 23 on the second termination panel 16b. Thus, the cable termination locations 23 are positioned on an interior surface of the second termination panel 16b that can be accessed by a worker by swinging the second termination panel 16b about the hinge 19.

When swinging from the storage position to the access position, the first and second termination panels 16a, 16b swing about their respective hinges 17, 19 in opposite directions. For example, the first termination panel 16a swings about hinge 17 in a clockwise direction from the storage position to the access position while the second termination panel 16b swings about hinge 19 in a counterclockwise direction from the storage position to the access position.

Also, the first and second termination panels 16a, 16b swing about their respective hinges 17, 19 in directions opposite their respective first and second front doors 50, 52. For example, the first termination panel 16a swings about hinge 17 from the storage position to the access position in a clockwise direction while the first front door 50 swings about hinge 53 from the closed position to the opened position in a counterclockwise direction. The second termination panel 16b swings about hinge 19 from the storage position to the access position in a counterclockwise direction while the second front door 52 swings about hinge 55 from the closed position to the opened position in a clockwise direction. The relative swinging between the first and second termination panels 16a, 16b and the first and second front doors 50, 52 enhances access to the cable termination locations 21, 23 when the first and second front doors 50, 52 are in the opened position and the first and second termination panels 16a, 16b are in the access positions.

Furthermore, when the first termination panel 16a is in the access position, a worker who is working on the cable termination locations 21 is blocked from accessing the cable termination locations 23 on the second termination panel 16b. Similarly, when the second termination panel 16b is in the access position, a worker who is working on the cable termination locations 23 is blocked from accessing the cable termination locations 21 on the first termination panel 16a. Advantageously, the relative swinging of the first and second termination panels 16a, 16b demarcates the cable termination locations 21, 23 such that a worker does not confuse one cable termination location for the other.

As further shown in FIG. 2, first and second side doors 60, 62 are pivotally attached to the frame 12 about hinges 63, 65, respectively. The first and second side doors 60, 62 can swing from a closed position to an opened position to provide access to the first and second splice areas 18a, 18b, respectively, and can swing from the opened position to the closed position to block access to the first and second splice areas 18a, 18b, respectively.

In the illustrated example, the first and second splice areas 18a, 18b can each include a plurality of splice trays 14. Each splice tray 14 includes structure for holding the ends of a plurality of fiber optic cables, and for holding individual splices between the ends of the cables. A variety of splice trays 14 may be used. The splice trays 14 can be pivotally mounted to groove plates 15 that are designed with slots for routing fibers to and from the splice trays 14.

In the embodiment illustrated in FIG. 2, the splice trays 14 and groove plates 15 in the first splice area 18a are mounted in a first stacked arrangement 70 that is attached to the frame 12 such that the splice trays 14 in the first splice area 18a are accessible inside the frame 12 when the first side door 60 is in the opened position. Similarly, the splice trays 14 and groove plates 15 in the second splice area 18b are mounted in a second stacked arrangement 72 that is attached to the frame 12 such that the splice trays 14 in the second splice area 18b are accessible inside the frame 12 when the second side door 62 is in the opened position.

Still referring to FIG. 2, a first worker can access the cable termination locations 21, 23 of the first and second termination panels 16a, 16b on the front plane 30 of the frame 12 while a second worker accesses the splice trays 14 in the first splice area 18a from the right side plane 34 of the frame 12 and a third worker accesses the splice trays 14 in the second splice area 18b from the left side plane 36 of the frame 12. Advantageously, three workers can simultaneously work on the telecommunications system 10 with little or no interference between them.

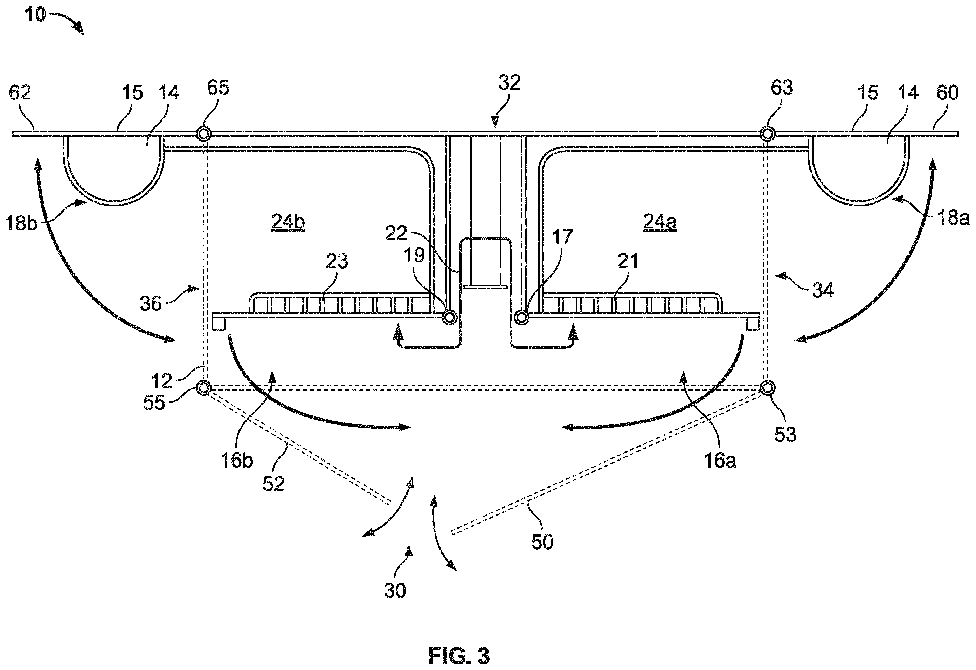

FIG. 3 is a top view of the frame 12 in accordance with another embodiment. Referring now to FIG. 3, the splice trays 14 and groove plates 15 in the first splice area 18a are attached to the first side door 60 such that when the first side door 60 is swung into the opened position, the splice trays 14 in the first splice area 18a are accessible on the first side door 60. Similarly, the splice trays 14 and groove plates 15 in the second splice area 18b are attached to the second side door 62 such that when the second side door 62 is swung into the opened position, the splice trays 14 in the second splice area 18b are accessible on the second side door 62. By attaching the splice trays 14 to the first and second side doors 60, 62, accessibility to the splice trays 14 on the right side plane 34 and left side plane 36 of the frame 12 can be improved.

When the first side door 60 is swung from the opened position to the closed position, the splice trays 14 attached to the first side door 60 are held inside a splice tray storage area 24a. When the second side door 62 is swung from the opened position to the closed position, the splice trays 14 attached to the second side door 62 are held inside a splice tray storage area 24b. Advantageously, the splice tray storage areas 24a, 24b are adjacent to the cable termination locations 21, 23 on the first and second termination panels 16a, 16b. This provides a compact arrangement that reduces the footprint of the telecommunications system 10.

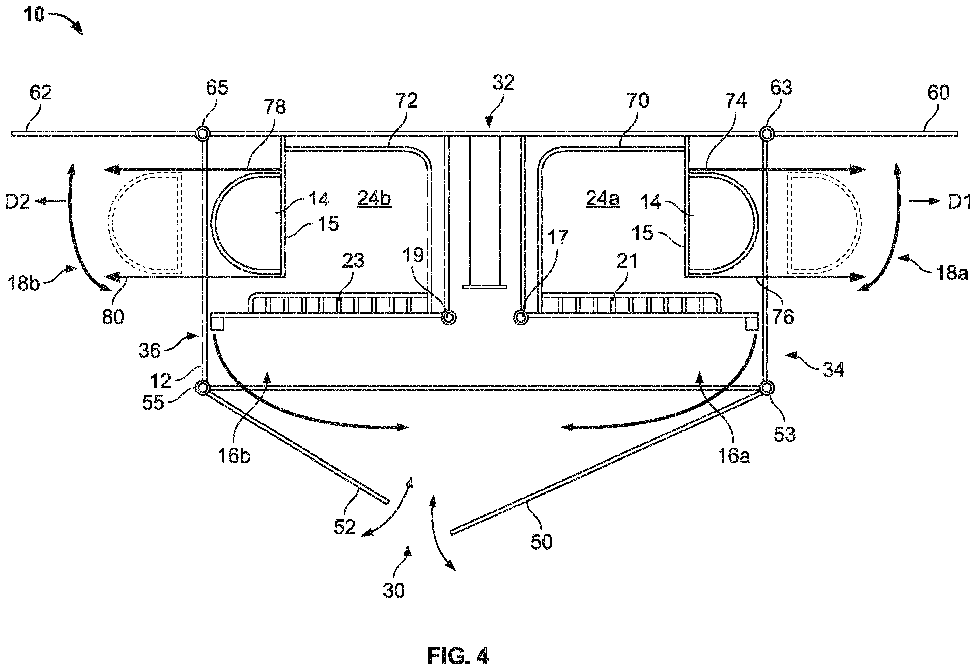

FIG. 4 is a top view of the frame 12 in accordance with another embodiment. In FIG. 4, the splice trays 14 and groove plates 15 in the first splice area 18a are mounted in a first stacked arrangement 70 and the splice trays 14 and groove plates 15 in the second splice area 18b are mounted in a second stacked arrangement 72. The first and second stacked arrangements 70, 72 are each slidable in opposite first and second directions D1, D2 along rails 74, 76, 78, and 80.

Advantageously, when the first side door 60 is swung into the opened position (i.e., swung in the counterclockwise direction about hinge 63), a worker can slide the first stacked arrangement 70 along the rails 74, 76 in the first direction D1 (e.g., to the right) such that the first stacked arrangement 70 with the splice trays 14 pivotally attached thereto can extend beyond the right side plane 34 to improve the accessibility of the splice trays 14 in the first splice area 18a. After the worker completes work on the splice trays 14 in the first splice area 18a, the worker can slide the first stacked arrangement 70 along the rails 74, 76 in the second direction D2 (e.g., to the left) to move the first stacked arrangement 70 with the splice trays 14 pivotally attached thereto back inside the splice tray storage area 24a. Thereafter, the worker can swing the first side door 60 into the closed position (i.e., swing the first side door 60 in the clockwise direction about hinge 63) to block access to the splice trays 14 in the first splice area 18a.

Similarly, when the second side door 62 is swung into the opened position (i.e., swung in the clockwise direction about hinges 65), a worker can slide the second stacked arrangement 72 along the rails 78, 80 in the second direction D2 (e.g., to the left) such that the second stacked arrangement 72 with the splice trays 14 pivotally attached thereto can extend beyond the left side plane 36 to improve the accessibility of the splice trays 14 in the second splice area 18b. After the worker completes work on the splice trays 14 in the second splice area 18b, the worker can slide the second stacked arrangement 72 along the rails 78, 80 in the first direction D1 (e.g., to the right) to move the second stacked arrangement 72 with the splice trays 14 pivotally attached thereto back inside the splice tray storage area 24b. Thereafter, the worker can swing the second side door 62 into the closed position (i.e., swing the second side door 62 in the counterclockwise direction about hinge 65) to block access to the splice trays 14 in the second splice area 18b.

When the first stacked arrangement 70 is sled back inside the splice tray storage area 24a, the splice trays 14 are adjacent to the cable termination locations 21 on the first termination panel 16a. Similarly, when the second stacked arrangement 72 is sled back inside the splice tray storage area 24b, the splice trays 14 are adjacent to the cable termination locations 23 on the second termination panel 16b. Advantageously, this provides a compact arrangement inside the telecommunications system 10 that reduces the footprint of the telecommunications system 10.

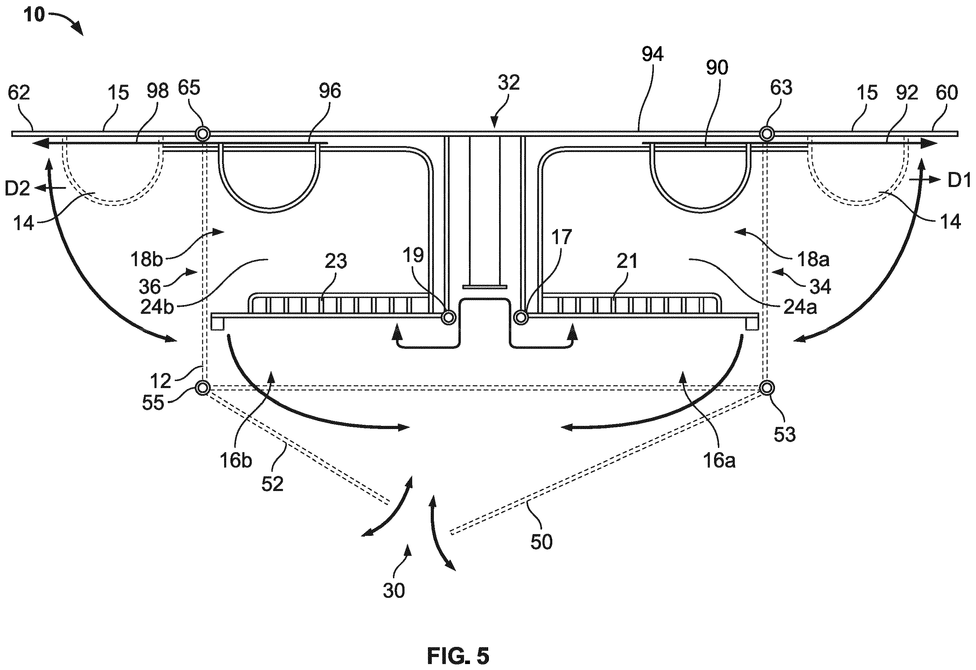

FIG. 5 is a top view of the frame 12 in accordance with another embodiment. Referring now to FIG. 5, the splice trays 14 and groove plates 15 in the first splice area 18a are mounted to one or more rails 90 attached to a rear panel 94 of the frame 12. The first side door 60 includes one or more rails 92 that align with the rails 90 when the first side door 60 is swung into the opened position such that a worker can slide the splice trays 14 along the rails 90 in the first direction D1 (e.g., to the right) and transition the splice trays 14 onto the rails 92 attached to the first side door 60. Advantageously, this allows the splice trays 14 in the first splice area 18a to be accessible on the first side door 60, and thereby improves the accessibility to the splice trays 14.

After the worker completes work on the splice trays 14 in the first splice area 18a, the worker can slide the splice trays 14 along the rails 92 in the second direction D2 (e.g., to the left) and transition the splice trays 14 back onto the rails 90 attached to the rear panel 94 to store the splice trays 14 inside the splice tray storage area 24a. Thereafter, the worker can swing the first side door 60 into the closed position to block access to the splice trays 14.

The splice trays 14 and groove plates 15 in the second splice area 18b are mounted to one or more rails 96 attached to the rear panel 94 of the frame 12. The second side door 62 includes one or more rails 98 that align with the rails 96 when the second side door 62 is swung into the opened position such that a worker can slide the splice trays 14 along the rails 96 in the second direction D2 (e.g., to the left) and transition the splice trays 14 onto the rails 98 attached to the second side door 62. Advantageously, this allows the splice trays 14 in the second splice area 18b to be accessible on the second side door 62, and thereby improves their accessibility.

After the worker completes the work on the splice trays 14 in the second splice area 18b, the worker can slide the splice trays 14 along the rails 98 in the first direction D1 (e.g., to the right) and transition the splice trays 14 back onto the rails 96 attached to the rear panel 94 to store the splice trays 14 inside the splice tray storage area 24b. Thereafter, the worker can swing the second side door 62 into the closed position to block access to the splice trays 14.

When the splice trays 14 are sled back inside the splice tray storage area 24a, the splice trays 14 in the first splice area 18a are adjacent to the cable termination locations 21 on the first termination panel 16a. Similarly, when the splice trays 14 are sled back inside the splice tray storage area 24b, the splice trays 14 in the second splice area 18b are adjacent to the cable termination locations 23 on the second termination panel 16b. This provides a compact arrangement inside the telecommunications system 10 that reduces the footprint of the telecommunications system 10.

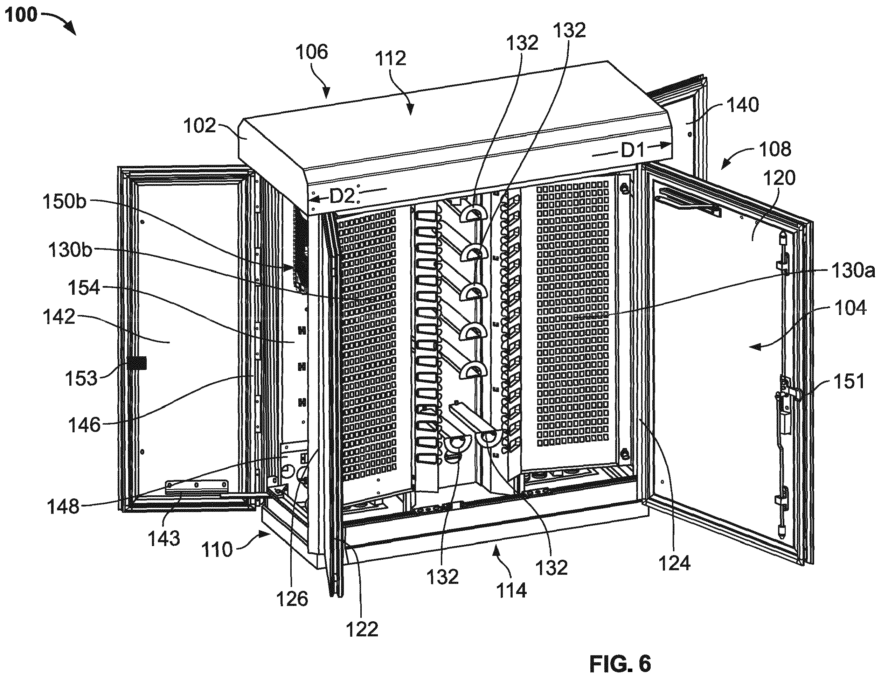

FIG. 6 is an isometric view of a telecommunications system 100 that includes a frame 102 for mounting telecommunications equipment. As shown in FIG. 6, the frame 102 defines a plurality of planes. In some examples, the frame 102 defines six quadrilateral planes including a front plane 104, a rear plane 106, a right side plane 108, a left side plane 110, a top plane 112, and a bottom plane 114. The frame 102 can have a substantially rectangular prism shape.

First and second front doors 120, 122 are pivotally attached to the frame 102 about hinges 124, 126, respectively. The first and second front doors 120, 122 can be swung from a closed position to an opened position to provide access to first and second termination panels 130a, 130b. The first and second front doors 120, 122 can be swung from the opened position to the closed position to block access to the first and second termination panels 130a, 130b. The first and second front doors 120, 122 can also include a lock 151 to prevent unauthorized access to the first and second termination panels 130a, 130b.

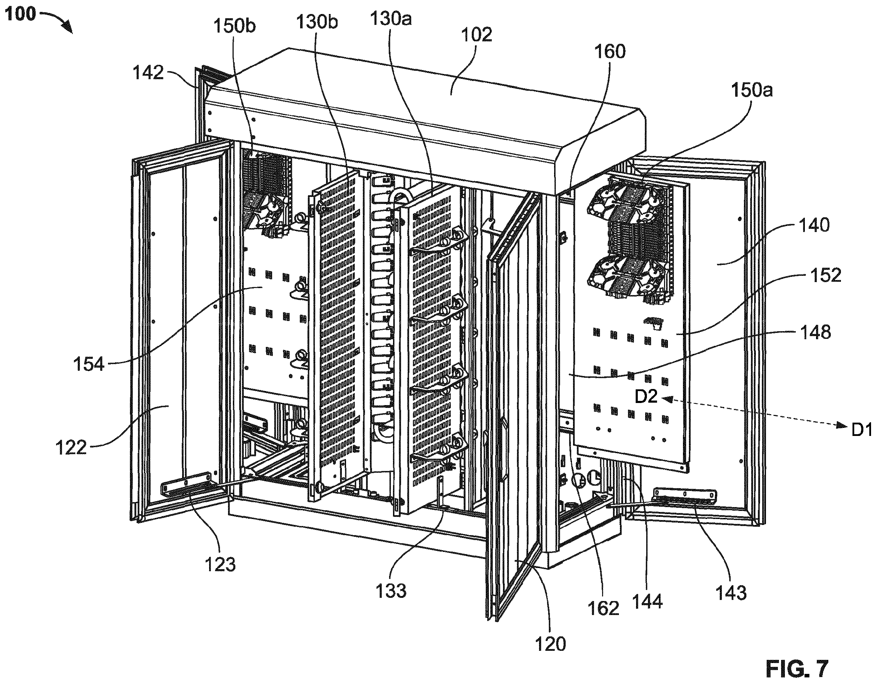

Stay open devices 123 (see FIG. 7) can be mounted to each first and second front doors 120, 122 and to the frame 102. The stay open devices 123 can maintain the first and second front doors 120, 122 in the opened position. When released, the stay open devices 123 allow the first and second front doors 120, 122 to swing between the opened and closed positions.

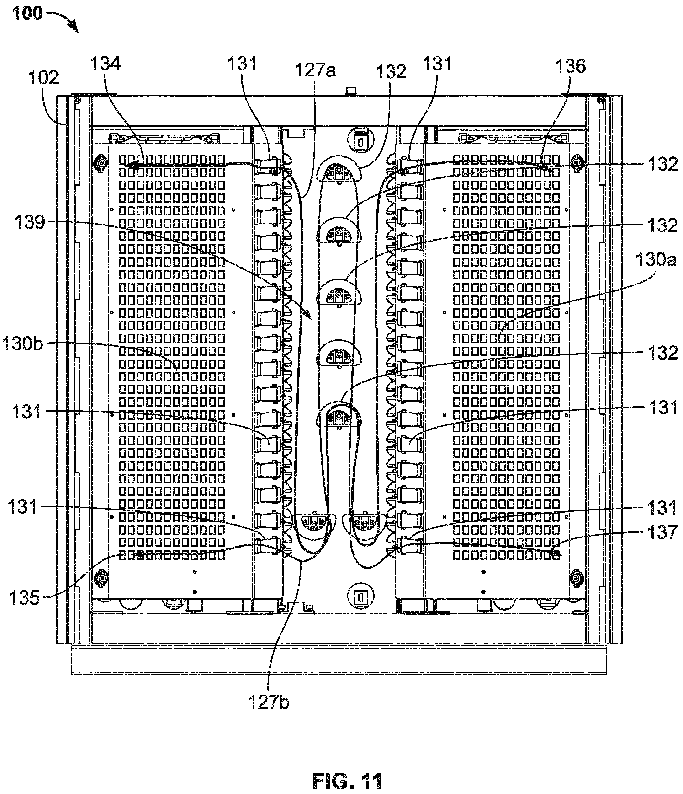

A plurality of cable management devices 132 are mounted to the frame 102 between the first and second termination panels 130a, 130b. The cable management devices 132 manage a plurality of fiber optic cables that run inside the telecommunications system 100. For example, the cable management devices 132 can manage a plurality of patch cords that run between the first and second termination panels 130a, 130b. The cable management devices 132 limit cable bend radius and manage cable slack. In some examples, the cable management devices 132 are cable radius limiters, spools, and the like. The patch cords can be used to cross-connect between various termination locations on the first and second termination panels 130a, 130b. The cable management devices 132 can define a cable slack storage area 139 (see FIG. 11) positioned between the first and second termination panels 130a, 130b.

First and second side doors 140, 142 are pivotally attached to the frame 102 about hinges 144, 146, respectively. The first and second side doors 140, 142 can be swung from a closed position to an opened position to provide access to first and second splice areas 150a, 150b, respectively, and can be swung from the opened position to the closed position to block access to the first and second splice areas 150a, 150b, respectively. The first and second side doors 140, 142 can each include a lock 153 to prevent unauthorized access to the first and second splice areas 150a, 150b inside the telecommunications system 100.

Stay open devices 143 are mounted to the first and second side doors 140, 142 and to the frame 102. When actuated, the stay open devices 143 maintain the first and second side doors 140, 142 in the opened position. When released, the stay open devices 143 allow the first and second side doors 140, 142 to swing between the opened and closed positions.

The first and second splice areas 150a, 150b can each slide between a storage position and an access position in directions substantially parallel to the rear plane 106. For example, the first splice area 150a can slide in a first direction D1 (e.g., to the right) such that the first splice area 150a can slide from the storage position to the access position. When in the access position, the first splice area 150a extends beyond the right side plane 108 to improve the accessibility of the first splice area 150a. Similarly, the second splice area 150b can slide in an opposite, second direction D2 (e.g., to the left) such that the second splice area 150b can slide from the storage position to the access position. When in the access position, the second splice area 150b extends beyond the left side plane 110 to improve the accessibility of the second splice area 150b.

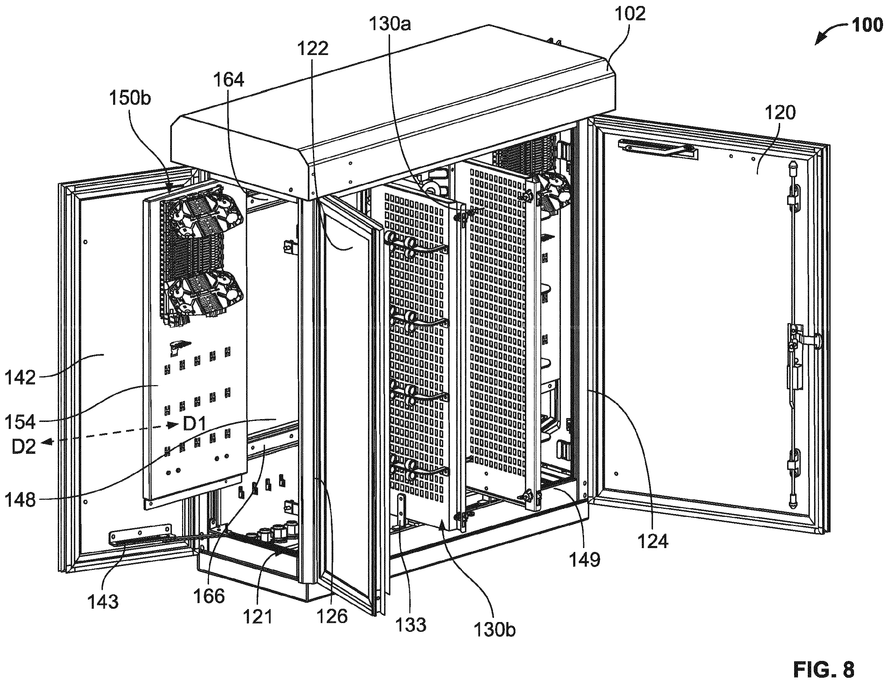

FIG. 7 is an isometric view of the telecommunications system 100 with the first splice area 150a shown in the access position. FIG. 8 is an isometric view of the telecommunications system 100 with the second splice area 150b shown in the access position. Referring now to FIGS. 7 and 8, the first and second splice areas 150a, 150b are each mounted to first and second panels 152, 154, respectively. As shown in FIG. 7, the first panel 152 is mounted to rails 160, 162 that are each attached to the rear panel 148 of the frame 102. As shown in FIG. 8, the second panel 154 is mounted to rails 164, 166 that are each attached to the rear panel 148.

When the first side door 140 is swung into the opened position, a worker can slide the first panel 152 along the rails 160, 162 in the first direction D1 such that the first panel 152 with the first splice area 150a attached thereto can extend beyond the right side plane 108 to improve the accessibility of the first splice area 150a. After the worker completes work on the first splice area 150a, the worker can slide the first panel 152 along the rails 160, 162 in the second direction D2 (e.g., to the left) to move the first panel 152 with the first splice area 150a attached thereto back inside the frame 102. Thereafter, the worker can swing the first side door 140 into the closed position to block access to the first splice area 150a inside the frame 102.

Similarly, when the second side door 142 is swung into the opened position, a worker can slide the second panel 154 along the rails 164, 166 in the second direction D2 (e.g., to the left) such that the second panel 154 with the second splice area 150b attached thereto can extend beyond the left side plane 110 to improve the accessibility of the second splice area 150b. After the worker completes work on the second splice area 150b, the worker can slide the second panel 154 along the rails 164, 166 in the first direction D1 (e.g., to the right) to move the second panel 154 with the second splice area 150b attached thereto back inside the frame 102. Thereafter, the worker can swing the second side door 142 into the closed position to block access to the second splice area 150b inside the frame 102 of the telecommunications system 100.

In FIG. 6, the first and second termination panels 130a, 130b are each shown in a storage position. In some examples, when in the storage position, the first and second termination panels 130a, 130b are angled relative to the front plane 104 towards a center of the frame 102 to improve accessibility to the first and second termination panels 130a, 130b. In some examples, the first and second termination panels 130a, 130b are adapter panels for pigtail routing such that the angled positioning of the first and second termination panels 130a, 130b relative to the front plane 104 improves access to the over length area and pigtail management.

In FIGS. 7 and 8, the first and second termination panels 130a, 130b are each shown in an access position. In some examples, the first and second termination panels 130a, 130b are each rotated about 90 degrees between the storage position and the access position.

The first and second termination panels 130a, 130b each include a stay open device 133. When actuated, the stay open device 133 can be used to maintain the first and second termination panels 130a, 130b in the access position. When the stay open device 133 is released, the first and second termination panels 130a, 130b can rotate between the access and storage positions. Also, the first and second termination panels 130a, 130b can each include a lock to prevent unauthorized access to an interior side of the first and second termination panels 130a, 130b.

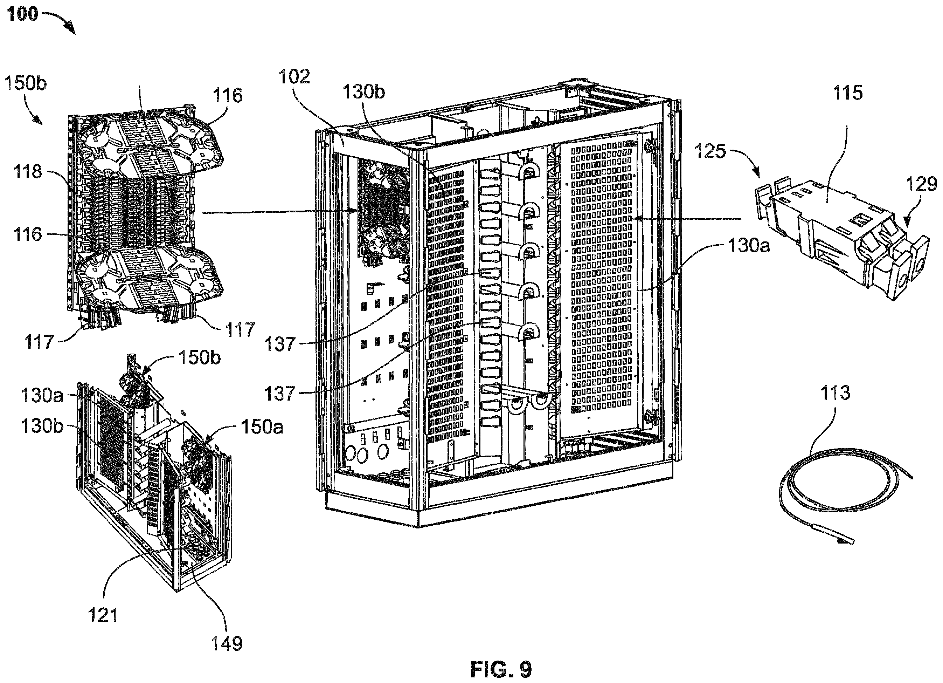

FIG. 9 is an exploded isometric view of the telecommunications system 100. Referring now to FIG. 9, the second splice area 150b is shown in detail and it is noted that the first splice area 150a is substantially similar. The first and second splice areas 150a, 150b each include a plurality of splice trays 116. Each splice tray 116 includes structure for holding the ends of a plurality of fiber optic cables and for holding individual splices between the ends of the cables. A variety of splice trays 116 may be used. The splice trays 116 can be pivotally mounted to groove plates 118 that are designed with slots for routing fibers to and from the splice trays 116.

As an illustrative example, the first and second splice areas 150a, 150b can each include four groove plates 118, and each groove plate 118 is configured to hold eight splice trays 116 such that the first and second splice areas 150a, 150b can each include 32 splice trays 116. Alternative examples are possible where each splice area may include more than or fewer than four groove plates 118, and each groove plate 118 can be configured to hold more than or fewer than eight splice trays 116 such that the first and second splice areas 150a, 150b can include more than or fewer than 32 splice trays 116.

As shown in FIGS. 8 and 9, a plurality of cable glands 121 are positioned on a bottom panel 149 of the frame 102 at both sides of the frame 102. The cable glands 121 provide cable entrance fixation and sealing. In alternative examples, the cable glands 121 can be positioned elsewhere on the frame 102 including the top, sides, and/or rear panels of the frame 102.

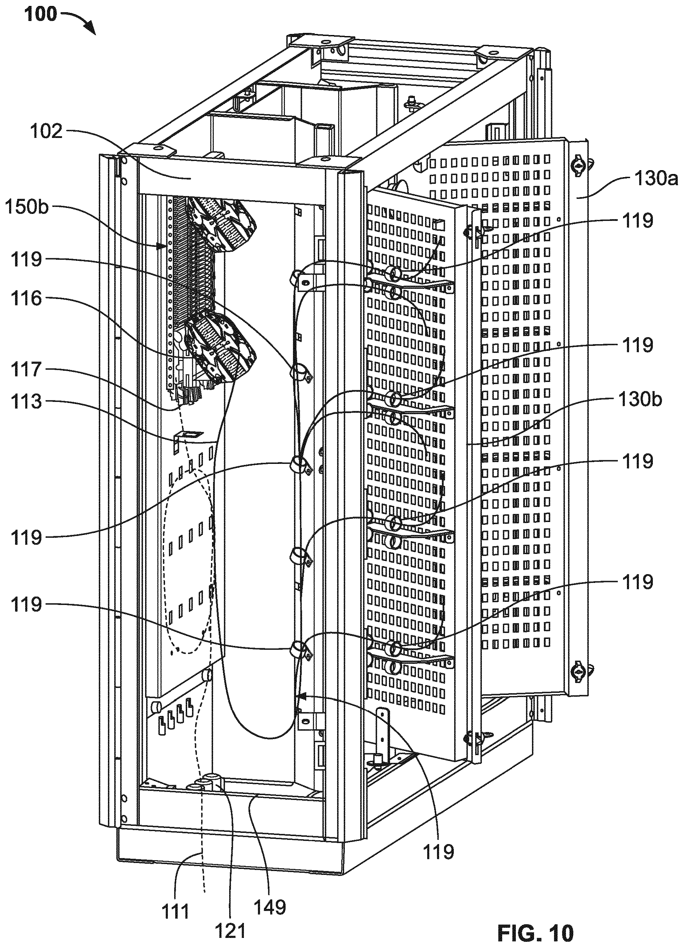

FIG. 10 is an isometric view of the telecommunications system 100 showing the second splice area 150b in the storage position and with the first and second termination panels 130a, 130b each shown in an access position. FIG. 11 is a front view of the telecommunications system 100 with the first and second termination panels 130a, 130b each shown in the storage position.

Referring now to FIGS. 9-11, an illustrative example of cable routing inside the telecommunications system 100 is provided as follows. In this illustrative example, the cable glands 121 positioned on the left side of the frame 102 receive one or more feeder cables 111 from a service provider while cable glands 121 positioned on the right side of the frame 102 receive customer cables from end user locations. The relative positioning of the feeder and customer cables inside the telecommunications system 100 can be flipped such that the cable glands 121 positioned on the left side of the frame 102 can receive customer cables while cable glands 121 positioned on the right side of the frame 102 can receive feeder cables.

The feeder cables 111 that enter the frame 102 via the cable glands 121 are routed vertically to the second splice area 150b by one or more guides 117 attached to a bottom groove plate 118. In the second splice area 150b, the feeder cables 111 are spliced to pigtail cables 113 on the splice trays 116. The pigtail cables 113 are managed by a plurality of cable management devices 119 inside the frame 102 such as various cable rings positioned on the frame 102 and various cable rings and trays on an interior side of the second termination panel 130b.

As shown in FIG. 9, the first and second termination panels 130a, 130b each include a plurality of openings. Each opening is configured to hold an adapter 115. Each adapter includes at least an interior connector port 125 and an exterior connector port 129. In the examples illustrated in the figures, the openings in the first and second termination panels 130a, 130b are square or rectangular shaped. Alternative shapes and sizes for the openings are contemplated. Also, in the examples illustrated in the figures, a duplex adapter is shown. It is contemplated that various types of adapters can be used in the telecommunications system 100.

Each pigtail cable 113 is terminated by a connector that can plug into the interior connector port 125 of an adapter 115 held by the second termination panel 130b. Referring now to FIG.11, patch cords 127 are terminated at opposite ends by connectors that can plug into the exterior connector ports 129 of the adapters 115. Thus, a patch cord 127 can be connected at one end to an adapter 115 on the second termination panel 130b and can be connected at an opposite, second end to an adapter 115 on the first termination panel 130a to provide a cross-connection between the feeder and customer cables. As described above, the cable management devices 132 can be used to manage the patch cords 127 between the first and second termination panels 130a, 130b. Additionally, each of the first and second termination panels 130a, 130b can include a vertical stack of cable fingers 131 to help guide the patch cords 127 from the termination panels to the cable management devices 132 that are positioned between the termination panels.

In the example illustrated in FIG. 11, a first patch cord 127a can be routed from a first termination location 134 on the second termination panel 130b to a second termination location 136 on the first termination panel 130a. A second patch cord 127b can be routed from a first termination location 135 on the second termination panel 130b to a second termination location 137 on the first termination panel 130a. Accordingly, a plurality of patch cords can be routed in various paths defined by the cable management devices 132 between the first and second termination panels 130a, 130b

The various embodiments described above are provided by way of illustration only and should not be construed to be limiting in any way. Various modifications can be made to the embodiments described above without departing from the scope of the invention as defined by the appended claims.

## Claims

1. A telecommunications enclosure (10, 100) comprising:
a frame (12, 102);
first and second termination panels (16a, 16b, 130a, 130b) mounted to the frame, the first and second termination panels being accessible from a front plane (30, 104), the first and second termination panels each including a plurality of cable termination locations (21, 23, 134, 135, 136, 137); and
at least one splice area (18, 150) positioned inside the frame, the at least one splice area being accessible from a right side plane (34, 108) or a left side plane (36, 110), and the at least one splice area configured to receive fiber optic cables for splicing to additional cables inside the frame, wherein the at least one splice area includes a first splice area (18a, 150a) accessible from the right side plane and a second splice area (18b, 150b) accessible from the left side plane, each of the first and second splice areas including a plurality of splice trays (14, 116) pivotally mounted to groove plates (15, 118);
wherein the first and second splice areas are slidable from an interior of the frame to an exterior of the frame such that the first and second splice areas are configured to extend beyond the right and left side planes to improve accessibility of the first and second splice areas, and wherein the first and second splice areas each includes a stacked arrangement (70, 72) of splice trays (14, 116).

2. The enclosure of claim 1, wherein the first termination panel is configured to rotate in a direction to move from a storage position to an access position, the second termination panel configured to rotate in an opposite direction to move from the storage position to the access position.

3. The enclosure of claim 1, further comprising first and second front doors pivotally attached to the frame on the front plane, the first and second front doors each configured to rotate from a closed position to an opened position to provide access to the first and second termination panels, and to rotate from the opened position to the closed position to block access.

4. The enclosure of claims 1 or 3, further comprising at least one side door pivotally attached to the frame on the right side plane or left side plane, the at least one side door configured to rotate from a closed position to an opened position to provide access to the at least one splice area and to rotate from the opened position to the closed position to block access.

5. The enclosure of claim 1, further comprising a first side door that is rotatable about a hinge between closed and opened positions, the first side door having one or more rails that align with one or more rails on a rear panel of the frame when the first side door is in the opened position, and the splice trays in the first splice area are slidable along the one or more rails on the rear panel for transitioning onto the one or more rails on the first side door.

6. The enclosure of claim 5, further comprising a second side door that is rotatable about a hinge between closed and opened positions, the second side door having one or more rails that align with the one or more rails on the rear panel of the frame when the second side door is in the opened position, and the splice trays in the second splice area are slidable along the one or more rails on the rear panel for transitioning onto the one or more rails on the second side door.

7. The enclosure of claim 1, further comprising:
a rear panel (94, 148) on the frame having at least one rail (96, 164, 166);
a first side door pivotally attached to the frame and configured to rotate between opened and closed positions, the first side door providing access to the first splice area; and
a first panel having a plurality of splice trays pivotally mounted thereto, the first panel being slidable from the at least one rail on the rear panel to extend beyond the right or left side plane of the frame.

8. The enclosure of claim 7, further comprising:
a second side door pivotally attached to the frame and configured to rotate between opened and closed positions; and
a second panel having a plurality of splice trays pivotally mounted thereto, the second panel being slidable from the at least one rail on the rear panel to extend beyond the right or left side plane of the frame that is opposite the first panel.

9. The enclosure of any of claims 1-8, further comprising a cable slack storage area (139) positioned between the first and second termination panels.

10. The enclosure of any of claims 1-9, further comprising cable management devices (20, 132) on an interior side of each of the first and second termination panels including cable rings and/or trays.

11. The enclosure of any of claims 1-9, further comprising cable management devices on each of the first and second termination panels including a vertical stack of cable fingers (131).

12. The enclosure of any of claims 1-4, further comprising one or more of the following:
a lock on one or both of the first and second termination panels;
a lock (151) on one or both of the first and second front doors;
a lock (153) on one or both of the first and second side doors.

13. The enclosure of any of claims 1-4, further comprising one or more of the following:
a stay open device (133) on one or both of the first and second termination panels;
a stay open device on one or both of the first and second front doors;
a stay open device on one or both of the first and second side doors.

## Patentansprüche

1. Telekommunikationsgehäuse (10, 100), umfassend:
einen Rahmen (12, 102);
erste und zweite Abschlussplatten (16a, 16b, 130a, 130b), die an dem Rahmen montiert sind, wobei die ersten und zweiten Abschlussplatten von einer vorderen Ebene (30, 104) zugänglich sind, wobei die ersten und zweiten Abschlussplatten jeweils eine Vielzahl von Kabelabschlussorten (21, 23, 134, 135, 136, 137) beinhalten; und
mindestens einen Spleißbereich (18, 150), der innerhalb des Rahmens positioniert ist, wobei der mindestens eine Spleißbereich von einer rechten Seitenebene (34, 108) oder einer linken Seitenebene (36, 110) zugänglich ist und konfiguriert ist, Glasfaserkabel zum Spleißen an zusätzliche Kabel innerhalb des Rahmens aufzunehmen, wobei der mindestens eine Spleißbereich einen ersten Spleißbereich (18a, 150a) umfasst, der von der rechten Seitenebene zugänglich ist, und einen zweiten Spleißbereich (18b, 150b), der von der linken Seitenebene zugänglich ist, wobei jeder der ersten und zweiten Spleißbereiche eine Vielzahl von Spleißkassetten (14, 116) umfasst, die schwenkbar an Nutplatten (15, 118) montiert sind;
wobei der erste und der zweite Spleißbereich von einer Innenseite des Rahmens zu einer Außenseite des Rahmens verschiebbar sind, sodass der erste und der zweite Spleißbereich konfiguriert sind, sich über die rechte und linke Seitenebene zu erstrecken, um die Zugänglichkeit des ersten und des zweiten Spleißbereichs zu verbessern, und wobei der erste und der zweite Spleißbereich jeweils eine gestapelte Anordnung (70, 72) von Spleißkassetten (14, 116) umfassen.

2. Gehäuse nach Anspruch 1, wobei die erste Abschlussplatte konfiguriert ist, sich in einer Richtung zu drehen, um sich von einer Aufbewahrungsposition zu einer Zugangsposition zu bewegen, wobei die zweite Abschlussplatte konfiguriert ist, sich in einer entgegengesetzten Richtung zu drehen, um sich von der Aufbewahrungsposition zu der Zugangsposition zu bewegen.

3. Gehäuse nach Anspruch 1, ferner umfassend eine erste und eine zweite Vordertür, die schwenkbar an dem Rahmen an der vorderen Ebene angebracht sind, wobei die erste und die zweite Vordertür jeweils konfiguriert sind, sich von einer geschlossenen Position in eine geöffnete Position zu drehen, um Zugang zu der ersten und der zweiten Abschlussplatte bereitzustellen, und sich von der geöffneten Position in die geschlossene Position zu drehen, um Zugang zu blockieren.

4. Gehäuse nach Anspruch 1 oder 3, ferner umfassend mindestens eine Seitentür, die schwenkbar an dem Rahmen an der rechten Seitenebene oder der linken Seitenebene angebracht ist, wobei die mindestens eine Seitentür konfiguriert ist, sich von einer geschlossenen Position in eine geöffnete Position zu drehen, um Zugang zu mindestens einem Spleißbereich bereitzustellen, und sich von der geöffneten Position in die geschlossene Position zu drehen, um Zugang zu blockieren.

5. Gehäuse nach Anspruch 1, ferner umfassend eine erste Seitentür, die um ein Scharnier zwischen geschlossenen und geöffneten Positionen drehbar ist, wobei die erste Seitentür eine oder mehrere Schienen aufweist, die mit einer oder mehreren Schienen auf einer hinteren Platte des Rahmens ausgerichtet sind, wenn die erste Seitentür in der geöffneten Position ist, und die Spleißkassetten in dem ersten Spleißbereich entlang der einen oder mehreren Schienen auf der hinteren Platte gleitbar sind, um auf die eine oder mehreren Schienen an der ersten Seitentür überzugehen.

6. Gehäuse nach Anspruch 5, ferner umfassend eine zweite Seitentür, die um ein Scharnier zwischen geschlossenen und geöffneten Positionen drehbar ist, wobei die zweite Seitentür eine oder mehrere Schienen aufweist, die mit der einen oder den mehreren Schienen auf der hinteren Platte des Rahmens ausgerichtet sind, wenn die zweite Seitentür in der geöffneten Position ist, und die Spleißkassetten in dem zweiten Spleißbereich entlang der einen oder mehreren Schienen auf der hinteren Platte gleitbar sind, um auf die eine oder mehreren Schienen an der zweiten Seitentür überzugehen.

7. Gehäuse nach Anspruch 1, ferner umfassend:
eine hintere Platte (94, 148) am Rahmen, die mindestens eine Schiene (96, 164, 166) aufweist;
eine erste Seitentür, die schwenkbar an dem Rahmen angebracht und konfiguriert ist, sich zwischen geöffneten und geschlossenen Positionen zu drehen, wobei die erste Seitentür Zugang zu dem ersten Spleißbereich bereitstellt; und
eine erste Platte mit einer Vielzahl von Spleißkassetten, die daran schwenkbar angebracht sind, wobei die erste Platte von der mindestens einen Schiene auf der hinteren Platte verschiebbar ist, um sich über die rechte oder linke Seitenebene des Rahmens hinaus zu erstrecken.

8. Gehäuse nach Anspruch 7, ferner umfassend:
eine zweite Seitentür, die schwenkbar am Rahmen angebracht und konfiguriert ist, sich zwischen geöffneten und geschlossenen Positionen zu drehen; und
eine zweite Platte mit einer Vielzahl von Spleißkassetten, die schwenkbar daran angebracht sind, wobei die zweite Platte von der mindestens einen Schiene auf der hinteren Platte verschiebbar ist, um sich über die rechte oder linke Seitenebene des Rahmens zu erstrecken, die der ersten Platte gegenüberliegt.

9. Gehäuse nach einem der Ansprüche 1 bis 8, ferner umfassend einen Kabelüberlängen-Aufbewahrungsbereich (139), der zwischen der ersten und der zweiten Abschlussplatte positioniert ist.

10. Gehäuse nach einem der Ansprüche 1 bis 9, ferner umfassend Kabelverwaltungsvorrichtungen (20, 132) an einer Innenseite jeder der ersten und zweiten Abschlussplatten, einschließlich Kabelringen und/oder -kassetten.

11. Gehäuse nach einem der Ansprüche 1 bis 9, ferner umfassend Kabelverwaltungsvorrichtungen auf jeder der ersten und zweiten Abschlussplatten, die einen vertikalen Stapel von Kabelfingern (131) aufweisen.

12. Gehäuse nach einem der Ansprüche 1 bis 4, ferner umfassend eines oder mehrere der folgenden:
ein Schloss an einer oder beiden der ersten und zweiten Abschlussplatten;
ein Schloss (151) an einer oder beiden der ersten und zweiten Vordertüren;
ein Schloss (153) an einer oder beiden der ersten und zweiten Seitentüren.

13. Gehäuse nach einem der Ansprüche 1 bis 4, ferner umfassend eines oder mehrere der folgenden:
eine Offenhaltevorrichtung (133) an einer oder beiden der ersten und zweiten Abschlussplatten;
eine Offenhaltevorrichtung an einer oder beiden der ersten und zweiten Vordertüren;
eine Offenhaltevorrichtung an einer oder beiden der ersten und zweiten Seitentüren.

## Revendications

1. Enceinte de télécommunications (10, 100) comprenant :
un cadre (12, 102) ;
des premier et deuxième panneaux de terminaison (16a, 16b, 130a, 130b) montés sur le cadre, les premier et deuxième panneaux de terminaison étant accessibles depuis un plan avant (30, 104), les premier et deuxième panneaux de terminaison comportant chacun une pluralité d'emplacements de terminaison de câble (21, 23, 134, 135, 136, 137) ; et
au moins une zone d'épissure (18, 150) positionnée à l'intérieur du cadre, l'au moins une zone d'épissure étant accessible depuis un plan latéral droit (34, 108) ou un plan latéral gauche (36, 110), et ladite au moins une zone d'épissure étant configurée pour recevoir des câbles à fibres optiques pour un épissurage avec des câbles supplémentaires à l'intérieur du cadre, dans laquelle l'au moins une zone d'épissure comporte une première zone d'épissure (18a, 150a) accessible depuis le plan latéral droit et une deuxième zone d'épissure (18b, 150b) accessible depuis le plan latéral gauche, chacune des première et deuxième zones d'épissure comportant une pluralité de plateaux d'épissures (14, 116) montés de manière pivotante sur des plaques à rainures (15, 118) ;
dans laquelle les première et deuxième zones d'épissure peuvent coulisser depuis l'intérieur du cadre vers l'extérieur du cadre de sorte que les première et deuxième zones d'épissure sont configurées pour s'étendre au-delà des plans latéraux droit et gauche afin d'améliorer l'accessibilité des première et deuxième zones d'épissure, et dans laquelle les première et deuxième zones d'épissure comportent chacune un agencement empilé (70, 72) de plateaux d'épissures (14, 116).

2. Enceinte selon la revendication 1, dans laquelle le premier panneau de terminaison est configuré pour tourner dans un sens pour passer d'une position de stockage à une position d'accès, le deuxième panneau de terminaison étant configuré pour tourner dans un sens opposé pour passer de la position de stockage à la position d'accès.

3. Enceinte selon la revendication 1, comprenant en outre des première et deuxième portes avant fixées de manière pivotante au cadre sur le plan avant, les première et deuxième portes avant étant chacune configurées pour tourner d'une position fermée à une position ouverte pour fournir un accès aux premier et deuxième panneaux de terminaison, et pour tourner de la position ouverte à la position fermée pour bloquer l'accès.

4. Enceinte selon l'une quelconque des revendications 1 ou 3, comprenant en outre au moins une porte latérale fixée de manière pivotante au cadre sur le plan latéral droit ou le plan latéral gauche, l'au moins une porte latérale étant configurée pour tourner d'une position fermée à une position ouverte pour fournir un accès à l'au moins une zone d'épissure et pour tourner de la position ouverte à la position fermée pour bloquer l'accès.

5. Enceinte selon la revendication 1, comprenant en outre une première porte latérale qui peut tourner autour d'une charnière entre des positions fermée et ouverte, la première porte latérale ayant un ou plusieurs rails qui s'alignent avec un ou plusieurs rails sur un panneau arrière du cadre lorsque la première porte latérale est dans la position ouverte, et les plateaux d'épissure dans la première zone d'épissure pouvant coulisser le long des un ou plusieurs rails sur le panneau arrière pour passer sur les un ou plusieurs rails de la première porte latérale.

6. Enceinte selon la revendication 5, comprenant en outre une deuxième porte latérale qui peut tourner autour d'une charnière entre des positions fermée et ouverte, la deuxième porte latérale ayant un ou plusieurs rails qui s'alignent avec les un ou plusieurs rails sur le panneau arrière du cadre lorsque la deuxième porte latérale est dans la position ouverte, et les plateaux d'épissure dans la deuxième zone d'épissure pouvant coulisser le long des un ou plusieurs rails sur le panneau arrière pour passer sur les un ou plusieurs rails de la deuxième porte latérale.

7. Enceinte selon la revendication 1, comprenant en outre :
un panneau arrière (94, 148) sur le cadre ayant au moins un rail (96, 164, 166) ;
une première porte latérale fixée de manière pivotante au cadre et configurée pour tourner entre des positions ouverte et fermée, la première porte latérale fournissant un accès à la première zone d'épissure ; et
un premier panneau ayant une pluralité de plateaux d'épissures montés de manière pivotante sur celui-ci, le premier panneau pouvant coulisser à partir de l'au moins un rail sur le panneau arrière pour s'étendre au-delà du plan latéral droit ou gauche du cadre.

8. Enceinte selon la revendication 7, comprenant en outre :
une deuxième porte latérale fixée de manière pivotante au cadre et configurée pour tourner entre des positions ouverte et fermée ; et
un deuxième panneau ayant une pluralité de plateaux d'épissures montés de manière pivotante sur celui-ci, le deuxième panneau pouvant coulisser à partir de l'au moins un rail sur le panneau arrière pour s'étendre au-delà du plan latéral droit ou gauche du cadre, opposé au premier panneau.

9. Enceinte selon l'une quelconque des revendications 1 à 8, comprenant en outre une zone de stockage de mou de câble (139) positionnée entre les premier et deuxième panneaux de terminaison.

10. Enceinte selon l'une quelconque des revendications 1 à 9, comprenant en outre des dispositifs de gestion de câbles (20, 132) sur un côté intérieur de chacun des premier et deuxième panneaux de terminaison, comprenant des anneaux et/ou plateaux de câbles.

11. Enceinte selon l'une quelconque des revendications 1 à 9, comprenant en outre des dispositifs de gestion de câbles sur chacun des premier et deuxième panneaux de terminaison, comprenant une pile verticale d'ergots de câble (131).

12. Enceinte selon l'une quelconque des revendications 1 à 4, comprenant en outre un ou plusieurs parmi les suivants :
un verrou sur l'un ou les deux parmi les premier et deuxième panneaux de terminaison ;
un verrou (151) sur l'une ou les deux parmi les première et deuxième portes avant ;
un verrou (153) sur l'une ou les deux parmi les première et deuxième portes latérales.

13. Enceinte selon l'une quelconque des revendications 1 à 4, comprenant en outre un ou plusieurs parmi les suivants :
un dispositif de maintien en position ouverte (133) sur l'un ou les deux parmi les premier et deuxième panneaux de terminaison ;
un dispositif de maintien en position ouverte sur l'une ou les deux parmi les première et deuxième portes avant ;
un dispositif de maintien en position ouverte sur l'une ou les deux parmi les première et deuxième portes latérales.
